# EUROPÄISCHE PATENTSCHRIFT

(11) **EP 1 840 011 B1**
(45) Veröffentlichungstag und Bekanntmachung des Hinweises auf die Patenterteilung: **22.10.2008**
(21) Anmeldenummer: 07003701.5
(22) Anmeldetag: 23.02.2007
(51) Int. Cl.: B62D 35/00

(54) **Luftleitvorrichtung für ein Fahrzeug**
Aerodynamic spoiler for a vehicle
Déflecteur aérodynamique pour un véhicule

(30) Priorität: 28.03.2006 DE 102006014262
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Fröschle, Mathias, 73760 Ostfildern (DE); Paul, Joachim, 70563 Stuttgart (DE)

(56) Entgegenhaltungen:
- EP-A- 1 738 996
- EP-A2- 1 118 529
- EP-A2- 1 138 582
- DE-A1-1102004 030 57

## Beschreibung

Die Erfindung betrifft eine Luftleitvorrichtung für ein Fahrzeug nach dem Oberbegriff des Patentanspruchs 1.

Die DE 10 2004 030 571 A1 offenbart eine solche Vorrichtung.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (Cₐₕ-Wert) des Kraftfahrzeugs bei gleichbleibendem oder auch verbessertem Luftwiederstandsbeiwert (C_{w}-Wert) erhöht werden, wobei diese bekannten Luftleitelemente in der Ruhestellung und in der Betriebsstellung jeweils dieselbe Quererstreckung aufweisen.

Die EP-A-1 738 996 offenbart eine Luftleitvorrichtung für ein Fahrzeug, die ein mittleres Hauptluftleitelement sowie zwei seitliche Zusatzluftleitelemente umfasst, wobei mit Hilfe der Zusatzluftleitelemente die Quererstreckung der Luftleitvorrichtung in der Betriebsstellung vergrößert werden und insbesondere der Hinterachsabtriebsbeiwert weiter erhöht werden kann. Nach der EP-A-1 738 996 erfolgt die Verstellbewegung der seitlichen Zusatzluftleitelemente gegenüber dem mittleren Hauptluftleitelement dann, wenn das Hauptluftleitelement von der Ruhestellung in die Betriebsstellung verlagert wurde. Die Verstellung der Zusatzluftleitelemente gegenüber dem Hauptluftleitelement erfolgt demnach zeitlich nach bzw. entkoppelt von der Verlagerung des Hauptluftleitelements.

Hiervon ausgehend liegt der vorliegenden Erfindung das Problem zu Grunde eine neuartige Luftleitvorrichtung für ein Fahrzeug zu schaffen. Dieses Problem wird dadurch gelöst, dass die eingangs genannte Luftleitvorrichtung durch die Merkmale des kennzeichnenden Teils des Patentanspruchs 1 weitergebildet ist.

Erfindungsgemäß sind die Zusatzluftleitelemente gegenüber dem oder jedem Hauptluftleitelement um mindestens zwei hauptluftleitelementfeste Drehpunkte und um jeweils mindestens zwei zusatzluftleitelementfeste Drehpunkte seitlich neben das Hauptluftleitelement schwenkbar, um dieselben von einer ebenfalls eingefahrenen Ruhestellung in eine ebenfalls ausgefahrene Betriebsstellung zu überführen.

Nach einer vorteilhaften Weiterbildung der Erfindung ist bei der Luftleitvorrichtung die Verstellung der seitlichen Zusatzluftleitelemente an die Verlagerung des oder jedes mittleren Hauptluftleitelements bei der Überführung desselben bzw. derselben von der Ruhestellung in die Betriebsstellung und umgekehrt derart gekoppelt, dass die seitlichen Zusatzluftleitelemente zeitgleich bzw. simultan mit der Verlagerung des oder jedes mittleren Hauptluftleitelements gegenüber dem oder jedem mittleren Hauptluftleitelement von der Ruhestellung in die Betriebsstellung bzw. von der Betriebsstellung in die Ruhestellung überführt werden können. Hierbei werden die seitlichen Zusatzluftleitelemente gegenüber dem oder jedem mittleren Hauptluftleitelement seitlich neben das Hauptluftleitelement verschwenkt. Innerhalb kürzester Zeit sowie auf einfache Art und Weise kann hierdurch die Quererstreckung der erfindungsgemäßen Luftleitvorrichtung angepasst werden.

Vorzugsweise ist jedes Zusatzluftleitelement über eine Betätigungseinrichtung schwenkbar am Hauptluftleitelement gelagert, wobei an der Betätigungseinrichtung jedes Zusatzluftleitelements eine Kopplungseinrichtung angreift, welche die schwenkartige Verstellung der seitlichen Zusatzluftleitelemente gegenüber dem mittleren Hauptluftleitelement an die Verlagerung des mittleren Hauptluftleitelements mechanisch koppelt.

Nach einer vorteilhaften Weiterbildung vergrößern die Zusatzluftleitelemente die Quererstreckung und die Längserstreckung des Hauptluftleitelements bzw. der Luftleitvorrichtung. Die gleichzeitige Vergrößerung der Quererstreckung und der Längserstreckung des Hauptluftleitelements bzw. der Luftleitvorrichtung ist aerodynamisch besonders vorteilhaft.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Heckbereich eines Fahrzeugs mit einer erfindungsgemäßen Luftleitvorrichtung in Ruhestellung in Draufsicht;
- Fig. 2: den Heckbereich der Fig. 1 mit der Luftleitvorrichtung in Betriebsstellung in einer Ansicht analog Fig. 1;
- Fig. 3: den Heckbereich der Fig. 1, 2 mit der Luftleitvorrichtung in Betriebsstellung in Rückansicht;
- Fig. 4: den Heckbereich der Fig. 1 bis 3 mit der Luftleitvorrichtung in Betriebsstellung in perspektivischer Ansicht von schräg hinten;
- Fig. 5: den Heckbereich der Fig. 1 bis 4 mit der Luftleitvorrichtung in Ruhestellung in Seitenansicht;
- Fig. 6: den Heckbereich der Fig. 1 bis 5 mit der Luftleitvorrichtung in Betriebsstellung in Seitenansicht;
- Fig. 7: einen Ausschnitt aus der erfindungsgemäßen Luftleitvorrichtung in Ruhestellung in schematisierter Draufsicht; und
- Fig. 8: den Ausschnitt der Fig. 5 mit der erfindungsgemäßen Luftleitvorrichtung in Betriebsstellung.

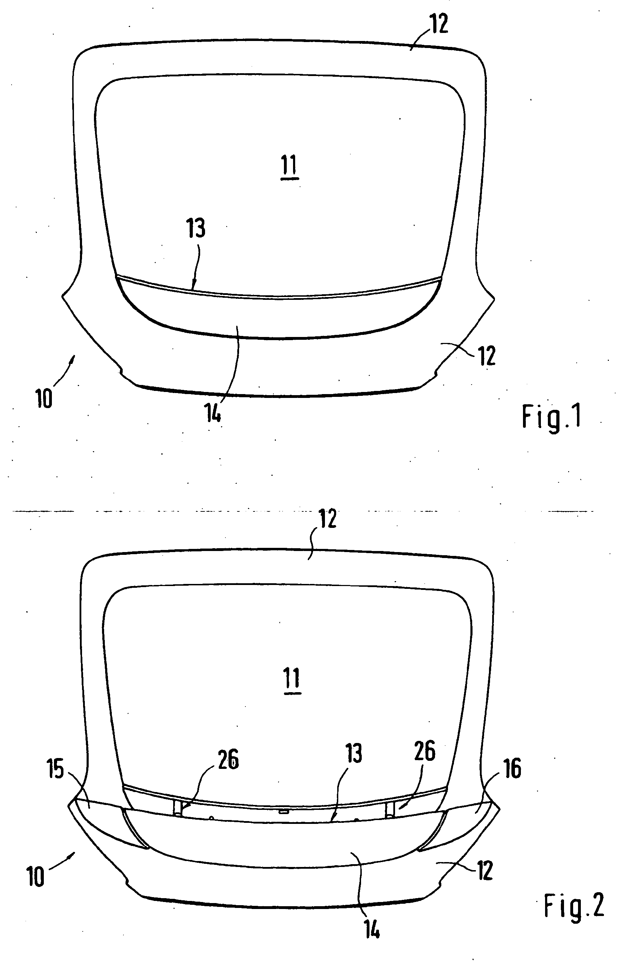

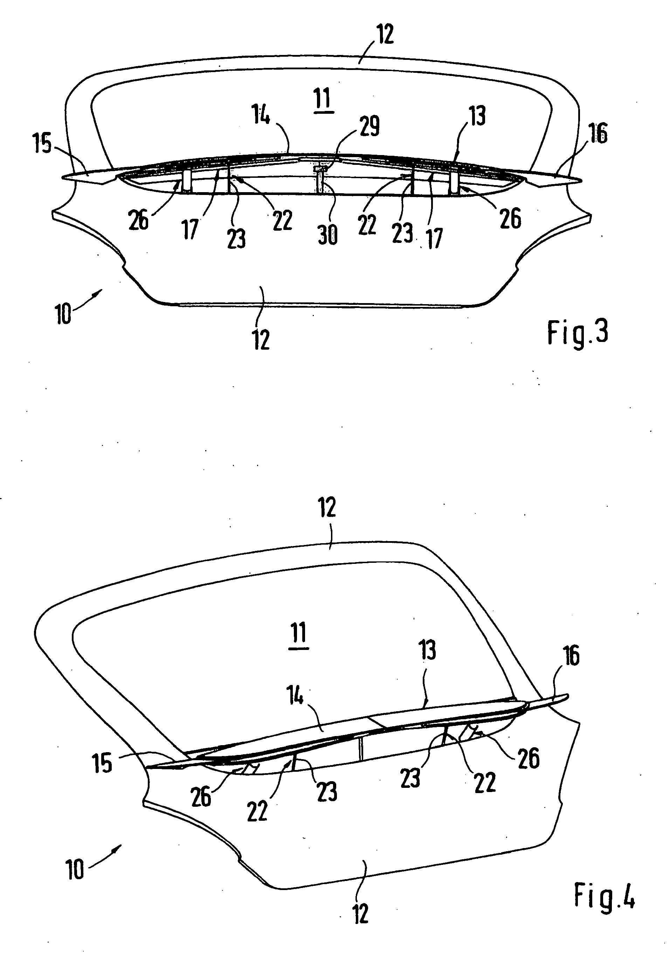

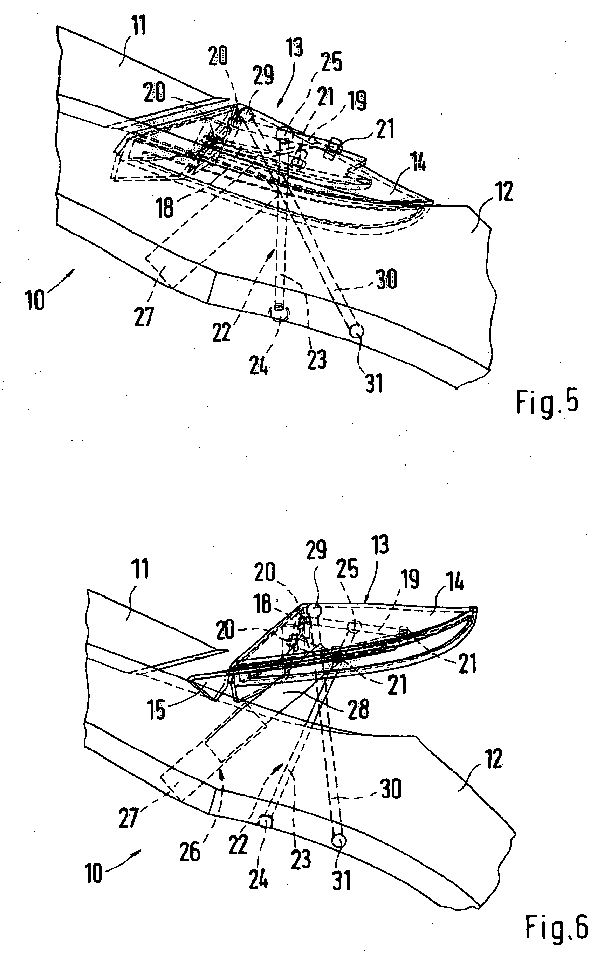

Fig. 1 bis 8 zeigen verschiedene Ansichten eines Heckbereichs 10 eines Fahrzeugaufbaus, wobei der Heckbereich 10 eine Heckscheibe 11 umfasst, die vorne, hinten sowie seitlich von einem Karosserieteil 12 umschlossen ist.

In einem hinteren Bereich des Karosserieteils 12 des fließheckartig ausgebildeten Heckbereichs 10 und demnach unterhalb des Heckfensters 11 ist eine Luftleitvorrichtung 13 positioniert, wobei in Fig. 1, 5 und 7 die Luftleitvorrichtung 13 in einer Ruhestellung und in Fig. 2, 3, 4, 6 und 8 dieselbe in einer Betriebsstellung gezeigt ist.

In der Ruhestellung der Luftleitvorrichtung 13 (siehe Fig. 1, 5, 7) ist dieselbe oberflächenbündig in den Heckbereich 10 des Fahrzeugs integriert. In der Betriebsstellung der Luftleitvorrichtung 13 (siehe Fig. 2, 3, 4, 6, 8) hingegen ist dieselbe aus der Oberflächenkontur des Heckbereichs 10 herausbewegt.

Die erfindungsgemäße Luftleitvorrichtung 13 verfügt im gezeigten Ausführungsbeispiel über ein mittleres Hauptluftleitelement 14 sowie zwei seitliche Zusatzluftleitelemente 15 und 16. Die seitlichen Zusatzluftleitelemente 15, 16 sind lediglich in der Betriebsstellung (siehe Fig. 2, 3, 4, 6, 8) der Luftleitvorrichtung 13 sichtbar. In der Ruhestellung sind die seitlichen Zusatzluftleitelemente 15, 16 vom mittleren Hauptluftleitelement 14 verdeckt.

Das mittlere Hauptluftleitelement 14 wird bei der Überführung bzw. Verlagerung von der Ruhestellung in die Betriebsstellung bzw. von der Betriebsstellung in die Ruhestellung im Sinne einer nach oben gerichteten Schwenkbewegung angehoben bzw. abgesenkt und dabei verschwenkt, wobei die beiden seitlichen Zusatzluftleitelemente 15, 16 diese Bewegung des mittleren Hauptluftleitelements 14 mit ausführen.

Im bevorzugten, gezeigten Ausführungsbeispiel der Erfindung sind zeitgleich zu der obigen, nach oben gerichteten Schwenkbewegung des mittleren Hauptluftleitelements 14, welche die beiden seitlichen Zusatzluftleitelemente 15, 16 zusammen mit dem mittleren Hauptluftleitelement 14 ausführen, die seitlichen Zusatzluftleitelemente 15 und 16 gegenüber dem mittleren Hauptluftleitelement 14 seitlich neben das mittlere Hauptluftleitelement 14 verschwenkbar, um dieselben simultan mit der Verlagerung des Hauptluftleitelements von der Ruhestellung in die Betriebsstellung von einer ebenfalls eingefahrenen Ruhestellung in eine ebenfalls ausgefahrene Betriebsstellung zu überführen. Die Schwenkbewegung der beiden Zusatzluftleitelemente 15 und 16 erfolgt dabei derart, dass die beiden Zusatzluftleitelemente 15 und 16 in der ausgeschwenkten Betriebsstellung seitlich neben dem Hauptluftleitelement 14 positioniert sind, und dann zumindest die Quererstreckung des Hauptluftleitelements 14 bzw. der Luftleitvorrichtung 13 vergrößern. Die Schwenkbewegung jedes seitlichen Zusatzluftleitelements 15 und 16 gegenüber dem mittleren Hauptluftleitelement 14 erfolgt dabei um mindestens zwei hauptluftleitelementfeste Drehpunkte und um mindestes zwei zusatzluftleitelementfeste Drehpunkte.

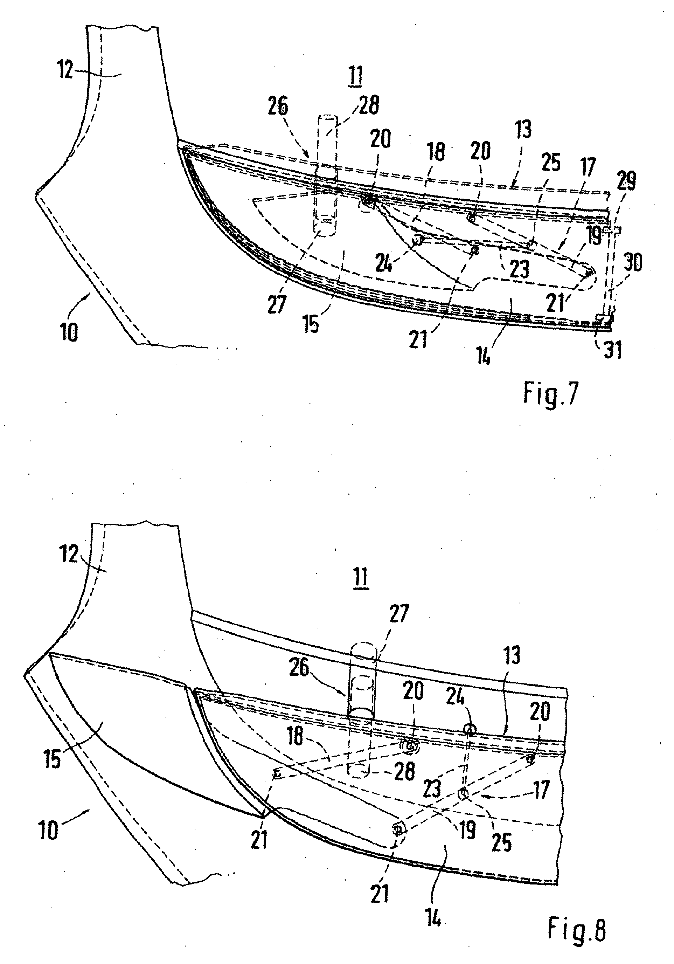

Zur Ausführung der Schwenkbewegung der seitlichen Zusatzluftleitelemente 15 und 16 gegenüber dem mittleren Hauptluftleitelement 14 ist jedes der seitlichen Zusatzluftleitelemente 15 und 16 über eine Betätigungseinrichtung 17 schwenkbar am Hauptluftleitelement 14 gelagert. Jede der Betätigungseinrichtungen 17 (siehe insbesondere Fig. 7, 8) umfasst dabei zwei Betätigungselemente 18 und 19, die ein Viergelenk bilden. Die Betätigungselemente 18 und 19 werden nachfolgend als Betätigungsstangen bezeichnet. Die Betätigungselemente 18 und 19 können auch als Betätigungslenker bezeichnet werden.

Jede der Betätigungsstangen 18 und 19 der in Fig. 7 und 8 dargestellten Betätigungseinrichtung 17 des seitlichen Zusatzluftleitelements 15 ist mit einem ersten Ende über jeweils ein Gelenk 20 mit dem Hauptluftleitelement 14 und an einem gegenüberliegenden zweiten Ende über jeweils ein Gelenk 21 mit dem jeweiligen seitlichen Zusatzluftleitelement 15 gelenkig verbunden. Die Gelenke 20 und 21 der Betätigungsstangen 18 und 19 bestimmen ein Viergelenk, welches die quer zur Längsrichtung des Fahrzeugs gerichtete Schwenkbewegung des seitlichen Zusatzluftleitelements 15 bestimmt. Das durch die Betätigungsstangen 18 und 19 definierte Viergelenk umfasst zwei hauptluftleitelementfeste Drehpunkte 20 sowie zwei zusatzluftleitelementfeste Drehpunkte 21, die letztendlich die Schwenkbewegung des Zusatzluftleitelements 15 definieren.

An der Betätigungseinrichtung 17 jedes seitlichen Zusatzluftleitelements 15, 16 greift eine Kopplungseinrichtung 22 an, welche die schwenkartige Verstellung der seitlichen Zusatzluftleitelemente 15, 16 gegenüber dem mittleren Hauptluftleitelement 14 an die Verlagerung des mittleren Hauptluftleitelements 14 mechanisch koppelt. Im gezeigten Ausführungsbeispiel wird jede Kopplungseinrichtung 22 von einem Kopplungselement 23 gebildet, welches nachfolgend als Kopplungsstange bezeichnet wird. Das Kopplungselement 23 kann auch als Kopplungslenker bezeichnet werden.

Die Kopplungsstange 23 einer jeden Kopplungseinrichtung 22 ist an einem ersten Ende über ein Gelenk 24 mit dem Karosserieteil und an einem gegen-überliegenden zweiten Ende über ein Gelenk 25 mit einer der beiden Betätigungsstangen 19 der Betätigungseinrichtung 17 des jeweiligen seitlichen Zusatzluftleitelements 15 bzw. 16 verbunden.

Die Gelenke 24 und 25, über welche die Kopplungsstangen 23 einerseits mit dem Karosserieteil 12 und andererseits mit der Betätigungseinrichtung 17 des jeweiligen seitlichen Zusatzluftleitelements 15, 16 verbunden sind, sind insbesondere als Kugelgelenke ausgeführt. Wie insbesondere Fig. 7 und 8 entnommen werden kann, greift jede Kopplungsstange 23 in etwa in der Mitte der Betätigungsstange 19 über das Gelenk 25 an derselben gelenkig an. Die Kopplungsstange 23 kann auch versetzt zu der Mitte der Betätigungsstange 19 über das Gelenk 25 an derselben angreifen. Dies hängt von der gewünschten Übersetzung ab.

Zur Verlagerung des Hauptluftleitelements 14 von der Ruhestellung in die Betriebsstellung sowie umgekehrt von der Betriebsstellung in die Ruhestellung ist dem Hauptluftleitelement 14 ebenfalls eine Betätigungseinrichtung zugeordnet, die im gezeigten Ausführungsbeispiel von zwei teleskopartigen Betätigungselementen 26 gebildet wird. Zu beiden Seiten des Hauptluftleitelements 14 greift dabei an demselben ein teleskopartiges Betätigungselement 26 an, wobei jedes der teleskopartigen Betätigungselemente 26 ein karosseriefestes Rohr 27 umfast, in welchem ein hauptluftleitelementfestes Rohr 28 teleskopartig geführt ist. Durch Ausfahren des hauptluftleitelementfesten Rohrs 28 aus dem karosseriefesten Rohr 27 der teleskopartigen Betätigungselemente 26 ist das Hauptluftleitelement 14 zusammen mit den seitlichen Zusatzluftleitelementen 15; 16 im Sinne der bereits erwähnten, nach oben gerichteten Schwenkbewegung aus der Oberflächenkontur des Heckbereichs 10 herausfahrbar und von der Ruhestellung in die Betriebsstellung überführbar, wobei der durch die teleskopartigen Betätigungselemente 26 vorgegebenen translatorischen Bewegungskomponente des Hauptluftleitelements 14 eine rotatorische Bewegungskomponente überlagert wird.

Diese überlagerte rotatorische Bewegungskomponente erfolgt um ein hauptluftleitelementfestes Gelenk 29 einer Kopplungsstange 30, die an einem dem Gelenk 29 gegenüberliegenden Ende über ein karosseriefestes Gelenk 31 am Karosserieteil 12 angreift. Die Überlagerung der durch die teleskopartigen Betätigungselemente 26 vorgegebenen translatorischen Bewegungskomponente mit der rotatorischen Bewegungskomponente um das Gelenk 29 resultiert letztendlich in der nach oben gerichteten Schwenkbewegung des Hauptluftleitelements 14, welche die Zusatzluftleitelemente 15 und 16 zusammen mit dem Hauptluftleitelement 14 ausführen.

Über die Kopplungsstangen 23 wird zeitgleich bzw. simultan die quer zur Längsrichtung des Fahrzeugs gerichtete Schwenkbewegung der seitlichen Zusatzluftleitelemente 15, 16 relativ zum mittleren Hauptluftleitelement 14 initiiert, um so die seitlichen Zusatzluftleitelemente 15 und 16 in eine Position relativ zum Hauptluftleitelement 14 zu verschwenken, in welcher dieselben seitlich neben dem Hauptluftleitelement 14 unter Vergrößerung zumindest der Quererstreckung des Hauptluftleitelements 14 und damit der Luftleitvorrichtung 13 angeordnet sind.

Nach dem in den Fig. 1 bis 8 gezeigten, bevorzugten Ausführungsbeispiel werden demnach die beiden seitlichen Zusatzluftleitelemente 15 und 16 der erfindungsgemäßen Luftleitvorrichtung 13 gegenüber dem mittleren Hauptluftleitelement 14 über jeweils ein ebenes Viergelenk unter Vergrößerung der Quererstreckung der Luftleitvorrichtung 13 verschwenkt. Jedes der ebenen Viergelenke wird dabei von zwei Betätigungsstangen 18, 19 gebildet, die über jeweils ein Gelenk 20 mit dem Hauptluftleitelement 14 und über jeweils ein Gelenk 21 mit dem jeweiligen Zusatzluftleitelement 15 bzw. 16 verbunden sind. An einer Betätigungsstange 19 des Viergelenks greift eine Kopplungsstange 23 an, die einerseits mit dieser Betätigungsstange 18 und andererseits mit dem Karosserieteil 12 über Kugelgelenke gelenkig verbunden ist. Die Kopplungsstange 23 koppelt dabei die Schwenkbewegung der seitlichen Zusatzluftleitelemente 15 und 16 gegenüber dem mittleren Hauptluftleitelement 14 an die Schwenkbewegung des Hauptluftleitelements 14 bei der Überführung desselben von der Ruhestellung in die Betriebsstellung bzw. umgekehrt von der Betriebsstellung in die Ruhestellung. Die Schwenkbewegung der Zusatzluftleitelemente 15, 16 ist damit an die Schwenkbewegung des Hauptluftleitelements 14 mechanisch gekoppelt.

Im gezeigten Ausführungsbeispiel greifen die Betätigungsstangen 18 und 19 der Betätigungseinrichtungen 17 über die Gelenke 20 an einem vorderen Abschnitt des Hauptluftleitelements 14 an. In diesem Fall erfolgt die zur Seite gerichtete Schwenkbewegung der seitlichen Zusatzluftleitelemente 15, 16 gegenüber dem mittleren Hauptluftleitelement 14 von schräg hingen nach schräg vorne. In Abweichung hierzu ist es auch möglich, dass die Betätigungsstangen 18, 19 der Betätigungseinrichtungen 17 mit den jeweiligen Gelenken 20 an einem hinteren Ende des Hauptluftleitelements 14 angreifen, wobei dann die Schwenkbewegung der seitlichen Zusatzluftleitelemente 15, 16 gegenüber dem Hauptluftleitelement 14 spiegelbildlich nach vorne erfolgt.

Eine andere Alternative besteht darin, dass die seitlichen Zusatzluftleitelemente 15 und 16 seitlich unterhalb des Hauptluftleitelements 14 hervorgeschwenkt werden.

Durch die oben beschriebene mechanische Kopplung der Schwenkbewegung des Hauptluftleitelements 14 mit der Schwenkbewegung der seitlichen Zusatzluftleitelemente 15, 16 gegenüber dem Hauptluftleitelement 14 ist lediglich ein einziger Antrieb erforderlich, um das mittlere Hauptluftleitelement 14 sowie die seitlichen Zusatzluftleitelemente 15, 16 von der Ruhestellung in die Betriebsstellung sowie umgekehrt von der Betriebsstellung in die Ruhestellung zu überführen.

Im Unterschied hierzu ist es auch möglich, den Zusatzluftleitelementen 15, 16 separate Antriebe zuzuordnen, wobei dann die mechanischen Kopplungseinrichtungen 22 entfallen können. In diesem Fall sind dann vorzugsweise die Antriebe der seitlichen Zusatzluftleitelemente 15, 16 mit dem Antrieb des Hauptluftleitelements 14 steuerungsseitig gekoppelt, um wiederum die zeitgleiche bzw. simultane Verlagerung der Hauptluftleitelements 14 sowie der seitlichen Zusatzluftleitelemente 15 und 16 zu gewährleisten.

In diesem Fall sind die Zusatzluftleitelemente dann auch entkoppelt vom Hauptluftleitelement bewegbar, um die Verstellbewegungen von Hauptluftleitelement und Zusatzluftleitelementen z.B. nacheinander auszuführen. Ebenso können in diesem Fall z.B. geschwindigkeitsabhängige Verstellungen der Zusatzluftleitelemente realisiert werden, die unabhängig von einer geschwindigkeitsabhängigen Verstellung des Hauptluftleitelements sind.

Im gezeigten Ausführungsbeispiel sind die seitlichen Zusatzluftleitelemente 15 und 16 derart konturiert, dass dieselben in der ausgefahrenen Betriebsstellung ausschließlich die Quererstreckung des Hauptluftleitelements 14 bzw. der Luftleitvorrichtung 13 vergrößern. Im Unterschied hierzu ist es auch möglich, die seitlichen Zusatzluftleitelemente 15 und 16 an einer Hinterkante derart zu konturieren, dass dieselben weiterhin gleichzeitig zumindest abschnittsweise die Längserstreckung des Hauptluftleitelements 14 und damit der Luftleitvorrichtung 13 vergrößern.

Zur Vermeidung von Bewegungen der seitlichen Zusatzluftleitelemente 15 und 16 in vertikaler Richtung auf Grundlage von Windlasten oder dergleichen können die Zusatzluftleitelemente 15 und 16 in eingefahrener Position und/oder ausgefahrener Position in Aufnahmen gefasst werden, die am Hauptluftleitelement 14 ausgebildet sind. Alternativ könne die Zusatzluftleitelemente 15 und 16 auch in einer Kulissenführung oder dergleichen geführt sein, die in jeder Position der Zusatzluftleitelemente 15 und 16 mit denselben in Eingriff steht und eine Bewegungen in vertikaler Richtung unterbindet.

## Patentansprüche

1. Luftleitvorrichtung für ein Fahrzeug, insbesondere für ein Personenkraftfahrzeug, die in einem Heckbereich des Fahrzeugs angeordnet ist und mindestens ein mittleres Hauptluftleitelement umfasst, welches von einer eingefahrenen Ruhestellung in eine ausgefahrene Betriebsstellung verlagerbar ist, wobei seitliche Zusatzluftleitelemente zusammen mit dem oder jedem Hauptluftleitelement verlagerbar sind, um dieselben von einer ebenfalls eingefahrenen Ruhestellung in eine ebenfalls ausgefahrene Betriebsstellung zu überführen, **dadurch gekennzeichnet, dass** die Zusatzluftleitelemente (15, 16) gegenüber dem oder jedem Hauptluftleitelement (14) um mindestens zwei hauptluftleitelementfeste Drehpunkte und um jeweils mindestens zwei zusatzluftleitelementfeste Drehpunkte seitlich neben das Hauptluftleitelement (14) schwenkbar sind.

2. Luftleitvorrichtung nach Anspruch 1, **dadurch gekennzeichnet, dass** jedes seitliche Zusatzluftleitelement (15, 16) über eine Betätigungseinrichtung (17) schwenkbar am Hauptluftleitelement (14) gelagert ist.

3. Luftleitvorrichtung nach Anspruch 2, **dadurch gekennzeichnet, dass** die jeweilige Betätigungseinrichtung (17) mindestens zwei ein Viergelenk bildende Betätigungselemente (18, 19) aufweist.

4. Luftleitvorrichtung nach Anspruch 3, **dadurch gekennzeichnet, dass** die Betätigungselemente (18, 19) an einem ersten Ende über jeweils ein Gelenk (20) mit dem Hauptluftleitelement (14) und an einem zweiten Ende über jeweils ein Gelenk (21) mit dem jeweiligen Zusatzluftleitelement (15, 16) verbunden sind.

5. Luftleitvorrichtung nach einem oder mehreren der Ansprüche 1 bis 4, **dadurch gekennzeichnet, dass** die seitlichen Zusatzluftleitelemente (15, 16) zeitgleich bzw. simultan mit der Verlagerung des oder jedes Hauptluftleitelements (14) von der ebenfalls eingefahrenen Ruhestellung in die ebenfalls ausgefahrene Betriebsstellung überführbar sind.

6. Luftleitvorrichtung nach Anspruch 5, **dadurch gekennzeichnet, dass** hierzu an der Betätigungseinrichtung (17) jedes Zusatzluftleitelements (15, 16) eine Kopplungseinrichtung (22) angreift, welche die schwenkartige Verstellung der seitlichen Zusatzluftleitelemente (15, 16) gegenüber dem mittleren Hauptluftleitelement (14) an die Verlagerung des mittleren Hauptluftleitelements (14) mechanisch koppelt.

7. Luftleitvorrichtung nach Anspruch 6 **dadurch gekennzeichnet, dass** jede Kopplungseinrichtung (22) ein Kopplungselement (23) aufweist, das einerseits über ein Gelenk (25) mit einem Betätigungselement (19) der Betätigungseinrichtung (17) und andererseits über ein Gelenk (24) mit einem Karosserieteil (12) verbunden ist.

8. Luftleitvorrichtung nach einem oder mehreren der Ansprüche 1 bis 7, **dadurch gekennzeichnet, dass** das Hauptluftleitelement (14) über eine Betätigungseinrichtung (26) von einer eingefahrenen Ruhestellung in eine ausgefahrene Betriebsstellung im Sinne einer nach oben gerichteten Schwenkbewegung verlagerbar ist, wobei die Zusatzluftleitelemente (15, 16) diese nach oben gerichtete Schwenkbewegung des Hauptluftleitelements (14) zusammen mit demselben ausführen, und wobei die seitlich gerichtete Schwenkbewegung der Zusatzluftleitelemente (15, 16) gegenüber dem oder jedem Hauptluftleitelement (14) derart an die nach oben gerichtete Schwenkbewegung des Hauptluftleitelements (14) gekoppelt ist, dass beide Schwenkbewegungen zeitgleich bzw. simultan ausführbar sind.

9. Luftleitvorrichtung nach Anspruch 8, **dadurch gekennzeichnet, dass** die nach oben gerichtete Schwenkbewegung des Hauptluftleitelement (14) eine nach oben gerichtete translatorische Bewegungskomponente und eine rotatorische Bewegungskomponente aufweist.

10. Luftleitvorrichtung nach Anspruch 9, **dadurch gekennzeichnet, dass** die rotatoriche Bewegungskomponente der nach oben gerichteten Schwenkbewegung des Hauptluftleitelements (14) um die Gelenke (25) erfolgt, über welche die Kopplungselemente (23) an Betätigungselementen (19) angreifen.

11. Luftleitvorrichtung nach einem oder mehreren der Ansprüche 1 bis 10, **dadurch gekennzeichnet, dass** die Zusatzluftleitelemente (15, 16) in Ruhestellung des Hauptluftleitelements (14) nicht sichtbar sind.

12. Luftleitvorrichtung nach einem oder mehreren der Ansprüche 1 bis 11, **dadurch gekennzeichnet, dass** die Zusatzluftleitelemente (15, 16) die Quererstreckung und die Längserstreckung des Hauptluftleitelements (14) bzw. der Luftleitvorrichtung vergrößern.

## Claims

1. Aerodynamic spoiler for a vehicle, in particular for a passenger motor vehicle, said aerodynamic spoiler being arranged in a rear region of the vehicle and comprising at least one central main air-guiding element which can be displaced from a retracted inoperative position into an extended operative position, wherein lateral additional air-guiding elements can be displaced together with the or each main air-guiding element in order to transfer the same from a likewise retracted inoperative position into a likewise extended operative position, **characterized in that** the additional air-guiding elements (15, 16) can be pivoted in relation to the or each main air-guiding element (14) about at least two pivots fixed on the main air-guiding element and about in each case at least two pivots mounted on the additional air-guiding elements next to the main air-guiding element (14).

2. Aerodynamic spoiler according to Claim 1, **characterized in that** each lateral additional air-guiding element (15, 16) is mounted pivotably on the main air-guiding element (14) via an actuating device (17).

3. Aerodynamic spoiler according to Claim 2, **characterized in that** the respective actuating device (17) has at least two actuating elements (18, 19) forming a four-part linkage.

4. Aerodynamic spoiler according to Claim 3, **characterized in that** the actuating elements (18, 19) are connected at a first end via a respective joint (20) to the main air-guiding element (14) and at a second end via a respective joint (21) to the respective additional air-guiding element (15, 16).

5. Aerodynamic spoiler according to one or more of Claims 1 to 4, **characterized in that** the lateral additional air-guiding elements (15, 16) can be transferred either synchronously or simultaneously with the displacement of the or of each main air-guiding element (14) from the likewise retracted inoperative position into the likewise extended operative position.

6. Aerodynamic spoiler according to Claim 5, **characterized in that**, for this purpose, a coupling device (22) acts on the actuating device (17) of each additional air-guiding element (15, 16), said coupling device mechanically coupling the pivoting-type adjustment of the lateral additional air-guiding elements (15, 16) in relation to the central main air-guiding element (14) to the displacement of the central main air-guiding element (14).

7. Aerodynamic spoiler according to Claim 6, **characterized in that** each coupling device (22) has a coupling element (23) which is connected at one end via a joint (25) to an actuating element (19) of the actuating device (17) and at the other end via a joint (24) to a body part (12).

8. Aerodynamic spoiler according to one or more of Claims 1 to 7, **characterized in that** the main air-guiding element (14) can be displaced via an actuating device (26) from a retracted inoperative position into an extended operative position in the sense of an upwardly directed pivoting movement, with the additional air-guiding elements (15, 16) carrying out said upwardly directed pivoting movement of the main air-guiding element (14) together with the same, and with the laterally directed pivoting movement of the additional air-guiding elements (15, 16) in relation to the or each main air-guiding element (14) being coupled to the upwardly directed pivoting movement of the main air-guiding element (14) in such a manner that both pivoting movements can be carried out either synchronously or simultaneously.

9. Aerodynamic spoiler according to Claim 8, **characterized in that** the upwardly directed pivoting movement of the main air-guiding element (14) has an upwardly directed translatory movement component and a rotatory movement component.

10. Aerodynamic spoiler according to Claim 9, **characterized in that** the rotatory movement component of the upwardly directed pivoting movement of the main air-guiding element (14) takes place about the joints (25) via which the coupling elements (23) act on actuating elements (19).

11. Aerodynamic spoiler according to one or more of Claims 1 to 10, **characterized in that** the additional air-guiding elements (15, 16) cannot be seen in the inoperative position of the main air-guiding element (14).

12. Aerodynamic spoiler according to one or more of Claims 1 to 11, **characterized in that** the additional air-guiding elements (15, 16) increase the transverse extent and the longitudinal extent of the main air-guiding element (14) and of the aerodynamic spoiler.

## Revendications

1. Déflecteur d'air pour un véhicule, en particulier pour une voiture particulière, qui est disposé dans une région arrière du véhicule et qui comprend au moins un élément déflecteur d'air principal central, qui peut être déplacé d'une position de repos rentrée dans une position fonctionnelle sortie, des éléments déflecteurs d'air latéraux supplémentaires pouvant être déplacés conjointement avec le ou chaque élément déflecteur d'air principal afin de transférer ceux-ci d'une position de repos également rentrée dans une position fonctionnelle également sortie, **caractérisé en ce que** les éléments déflecteurs d'air supplémentaires (15, 16) peuvent pivoter par rapport au ou à chaque élément déflecteur d'air principal (14) autour d'au moins deux centres de rotation fixes par rapport aux éléments déflecteurs d'air principaux et latéralement à côté de l'élément déflecteur d'air principal (14) autour d'au moins deux centres de rotation respectifs fixes par rapport aux éléments déflecteurs d'air supplémentaires.

2. Déflecteur d'air selon la revendication 1, **caractérisé en ce que** chaque élément déflecteur d'air supplémentaire latéral (15, 16) est monté par le biais d'un dispositif d'actionnement (17) de manière à pouvoir pivoter sur l'élément déflecteur d'air principal (14).

3. Déflecteur d'air selon la revendication 2, **caractérisé en ce que** le dispositif d'actionnement respectif (17) présente au moins deux éléments d'actionnement (18, 19) formant un quadrilatère articulé.

4. Déflecteur d'air selon la revendication 3, **caractérisé en ce que** les éléments d'actionnement (18, 19) sont connectés à une première extrémité par le biais d'une articulation respective (20) à l'élément déflecteur d'air principal (14) et à une deuxième extrémité par le biais d'une articulation respective (21) à l'élément déflecteur d'air supplémentaire respectif (15, 16).

5. Déflecteur d'air selon l'une quelconque ou plusieurs des revendications 1 à 4, **caractérisé en ce que** les éléments déflecteurs d'air supplémentaires latéraux (15, 16) peuvent être transférés en même temps ou simultanément au décalage du ou de chaque élément déflecteur d'air principal (14) de la position de repos également rentrée dans la position fonctionnelle également sortie.

6. Déflecteur d'air selon la revendication 5, **caractérisé en ce qu'**un dispositif d'accouplement (22) vient en prise à cet effet avec le dispositif d'actionnement (17) de chaque élément déflecteur d'air supplémentaire (15, 16), et accouple mécaniquement le réglage pivotant des éléments déflecteurs d'air latéraux supplémentaires (15, 16) par rapport à l'élément déflecteur d'air principal central (14) avec le décalage de l'élément déflecteur d'air principal central (14).

7. Déflecteur d'air selon la revendication 6, **caractérisé en ce que** chaque dispositif d'accouplement (22) présente un élément d'accouplement (23) qui est connecté d'une part par le biais d'une articulation (25) à un élément d'actionnement (19) du dispositif d'actionnement (17) et d'autre part par le biais d'une articulation (24) à une pièce de la carrosserie (12).

8. Déflecteur d'air selon l'une quelconque ou plusieurs des revendications 1 à 7, **caractérisé en ce que** l'élément déflecteur d'air principal (14) peut être décalé dans le sens d'un mouvement de pivotement orienté vers le haut par le biais d'un dispositif d'actionnement (26) depuis une position de repos rentrée dans une position fonctionnelle sortie, les éléments déflecteurs d'air supplémentaires (15, 16) effectuant ce mouvement de pivotement orienté vers le haut de l'élément déflecteur d'air principal (14) conjointement avec celui-ci, et le mouvement de pivotement orienté latéralement des éléments déflecteurs d'air supplémentaires (15, 16) par rapport au ou à chaque élément déflecteur d'air principal (14) est accouplé au mouvement de pivotement orienté vers le haut de l'élément déflecteur d'air principal (14) de telle sorte que les deux mouvements de pivotement puissent être effectués en même temps ou simultanément.

9. Déflecteur d'air selon la revendication 8, **caractérisé en ce que** le mouvement de pivotement orienté vers le haut de l'élément déflecteur d'air principal (14) présente une composante de mouvement de translation orientée vers le haut et une composante de mouvement de rotation.

10. Déflecteur d'air selon la revendication 9, **caractérisé en ce que** la composante de mouvement de rotation du mouvement de pivotement orienté vers le haut de l'élément déflecteur d'air principal (14) s'effectue autour des articulations (25), par le biais desquelles les éléments d'accouplement (23) viennent en prise sur les éléments d'actionnement (19).

11. Déflecteur d'air selon l'une quelconque ou plusieurs des revendications 1 à 10, **caractérisé en ce que** les éléments déflecteurs d'air supplémentaires (15, 16) ne sont pas visibles dans la position de repos de l'élément déflecteur d'air principal (14).

12. Déflecteur d'air selon l'une quelconque ou plusieurs des revendications 1 à 11, **caractérisé en ce que** les éléments déflecteurs d'air supplémentaires (15, 16) augmentent l'étendue transversale et l'étendue longitudinale de l'élément déflecteur d'air principal (14) ou du déflecteur d'air.
